# EUROPÄISCHE PATENTSCHRIFT

(11) **EP 3 282 823 B1**
(45) Veröffentlichungstag und Bekanntmachung des Hinweises auf die Patenterteilung: **29.05.2019**
(21) Anmeldenummer: 16716522.4
(22) Anmeldetag: 06.04.2016
(51) Int. Cl.: A01C 7/08, A01C 7/04

(54) **LANDWIRTSCHAFTLICHE VERTEILVORRICHTUNG ZUM AUSBRINGEN VON KOERNIGEM GUT UND VERFAHREN ZUM UMGANG MIT KOERNIGEM GUT**
AGRICULTURAL DISTRIBUTING DEVICE FOR DISPENSING GRANULAR MATERIAL AND METHOD FOR HANDLING GRANULAR MATERIAL
DISPOSITIF DE DISTRIBUTION AGRICOLE POUR DÉLIVRER UN PRODUIT EN GRAINS ET PROCÉDÉ DE MANIEMENT D'UN PRODUIT EN GRAINS

(30) Priorität: 17.04.2015 DE 102015105919
(43) Veröffentlichungstag der Anmeldung: 21.02.2018
(73) Patentinhaber: Horsch Maschinen GmbH, 92421 Schwandorf (DE)
(72) Erfinder: PIRKENSEER, Michael, 92421 Schwandorf (DE)
(74) Vertreter: Benninger, Johannes
(86) Internationale Anmeldenummer: PCT/EP2016/057498
(87) Internationale Veröffentlichungsnummer: WO 2016/165990

(56) Entgegenhaltungen:
- EP-A1- 1 348 326
- EP-A1- 2 196 079
- EP-A2- 0 369 766
- WO-A1-2013/130005
- WO-A1-2013/180619
- US-A- 6 092 746

## Beschreibung

Die vorliegende Erfindung betrifft eine landwirtschaftliche Verteilvorrichtung zum Ausbringen von körnigem Gut und ein Verfahren zum Umgang mit körnigem Gut.

Aus dem Stand der Technik sind bereits eine Vielzahl an Verteilvorrichtungen bekannt, mittels welcher körniges Gut bzw. Saatgut auf einem landwirtschaftlichen Arbeitsfeld ausgebracht werden kann. Um das jeweilige Korn bis zu den Vereinzelungsorganen sicher transportieren zu können und um Vereinzelungsorgane zur Dosierung des körnigen Gutes mit Druckluft zu versorgen, sind weitestgehend gleiche oder unterschiedliche Druckniveaus und/oder Strömungsgeschwindigkeiten notwendig.

Für Überdruckdosiersysteme sind daher aus dem Stand der Technik bereits Vorrichtungen bekannt, mittels welcher entsprechende Druckniveaus bzw. Strömungsgeschwindigkeiten erzeugt werden können. Eine derartige Vorrichtung offenbart beispielsweise die PCT-Anmeldung WO 2013 180 619 A1. Das in der WO-Schrift beschriebene System umfasst eine erste Strömungserzeugungseinrichtung, welche einen Luftvolumenstrom erzeugt, um in einem Behälter angeordnetes Saatgut in Richtung mehrerer Vereinzelungsorgane zu bewegen. Zudem ist eine weitere Strömungserzeugungseinrichtung vorgesehen, welche gegenüber der ersten Strömungserzeugungseinrichtung eine geringere Leistung besitzt. Mittels der weiteren Strömungserzeugungseinrichtung werden die Vereinzelungsorgane mit Druckluft beaufschlagt. Die Vereinzelungsorgane können sodann mittels der Druckluft das jeweilige Saatgut vereinzeln. Vorrichtungen gemäß WO-Offenlegungsschrift besitzen einen umfangreichen Aufbau, da zwei Strömungserzeugungseinrichtungen notwendig sind, um unterschiedliche Druckniveaus aufzubauen und hiermit das Saatgut zu transportieren und zu vereinzeln.

Eine weitere Vorrichtung, mittels welcher unterschiedliche Druckniveaus hergestellt werden können um Saatgut zu transportieren und zu vereinzeln, offenbart die WO 2010/144801 A2. Über ein Zentralgebläse wird ein Luftvolumenstrom erzeugt, mittels welches Luftvolumenstroms Saatgut transportiert werden kann sowie mehrere Dosierorgane mit Druckluft beaufschlagt werden. Um die entsprechenden Druckniveaus zu erreichen, sind Sensoren vorgesehen, die das jeweilige Druckniveaus erfassen und mit einem Regelkreis zusammenwirken. Über den Regelkreis kann eine Fahne gedreht werden, welche die Druckluft anteilig der jeweiligen Leitungsverbindung zuführt, die für den Transport von Saatgut vorgesehen ist bzw. die Dosierorgane mit Druckluft beaufschlägt. Weiter wird die Druckluft über ein Lochblech unmittelbar vor dem jeweiligen Dosierorgan abgeschieden. Eine derartige Abscheidung ist mit einem Energieverlust einhergehend. Weiter kann eine derartige Abscheidung aus ökologischen Aspekten unerwünscht sein, da die Praxis gezeigt hat, dass derartige Abscheidungen den Bienenbestand gefährden können. Zudem besitzt das System eine gewisse Trägheit und Ungenauigkeit bei Ansteuerung der Fahne über den Regelkreis.

Durch die EP 2 196 079 A1 ist ein Nachfüllsystem für einen Vorratsbehälter einer landwirtschaftlichen Verteilmaschine aus einem Vorratsrank offenbart. Zum Vereinzeln der im Vorratsbehälter mitgeführten Körner ist ein Vereinzelungsorgan vorgesehen, welches mit einer Druckdifferenz, insbesondere mit einem Überdruck, beaufschlagt wird. Der Überdruck wird durch ein Gebläse erzeugt, welches über Druckleitungen und Nachfüllleitungen mit dem Gehäuse des Vereinzelungsorgans, dem Vorratstank und dem Vorratsbehälter verbunden ist. Zwischen der Druckleitung sowie der Nachfüllleitung und dem Gebläse ist ein Luftverteiler vorgesehen, welcher am Auslass des Gebläses angeordnet ist. Durch den Luftverteiler wird die durch das Gebläse erzeugte Luftströmung bzw. Drücke in die Druckleitung und in die Nachfüllleitung aufgeteilt.

Eine Aufgabe der Erfindung kann aus diesem Grunde darin gesehen werden, eine Möglichkeit zur Verfügung zu stellen, mittels welcher körniges Gut auf einfache und unkomplizierte Weise transportiert und vereinzelt werden kann. Zudem kann eine Aufgabe darin gesehen werden, eine Möglichkeit zur Verfügung zu stellen, welche einen Transport sowie eine Vereinzelung von körnigem Gut mit reduziertem Energieaufwand und mit zumindest weitgehend geringer Belastung der Ökologie erlaubt.

Die obigen Aufgaben werden durch eine landwirtschaftliche Verteilmaschine sowie durch ein Verfahren gelöst, welche die Merkmale in den Schutzansprüchen 1 und 8 umfassen. Weitere vorteilhafte Ausgestaltungen werden durch die Unteransprüche beschrieben.

Die vorliegende Erfindung betrifft eine landwirtschaftliche Verteilvorrichtung zum Ausbringen von körnigem Gut. Das körnige Gut kann beispielsweise als Saatgut und/oder Dünger ausgebildet sein.

Die Verteilvorrichtung umfasst ein Behältnis bzw. einen Speicher für das körnige Gut. Zudem ein oder mehrere Dosiereinrichtungen, welche zur Vereinzelung des körnigen Gutes via Druckluft ausgebildet sind bzw. welche körniges Gut mittels eines Überdrucks und/oder einer Druckdifferenz bzw. einer Luftströmung vereinzeln können.

Im Rahmen der vorliegenden Erfindung sind mehrere Dosiereinrichtungen fluidisch aneinander gekoppelt bzw. wird ein Luftvolumenstrom ggf. aufgezweigt und mehreren Dosiereinrichtungen zugeführt.

Weiter umfasst die landwirtschaftliche Verteilvorrichtung eine Strömungserzeugungseinrichtung, die ein Gehäuse sowie wenigstens ein im Gehäuse drehendes Lüfterrad aufweist. Die Strömungserzeugungseinrichtung kann als Radialgebläse ausgebildet sein. Das Gehäuse kann schneckenförmig ausgebildet sein bzw. eine Innenwand zum Führen einer Luftströmung besitzen, welche zumindest abschnittsweise einen in Richtung weg des Lüfterrades konvex gekrümmten Verlauf besitzt. Ein Strömungsquerschnitt des Gehäuses kann sich in Richtung einer Auslassöffnung bzw. in Richtung einer oder mehrerer nachfolgend noch beschriebenen ersten und/oder zweiten Leitungsverbindung flächig vergrößern.

Das Lüfterrad kann mehrere Schaufeln besitzen, die am Lüfterrad positioniert sind und einen Ring ausbilden. Innerhalb des Ringes kann das Lüfterrad keine Schaufeln besitzen bzw. einen Freiraum ausbilden, in welchen Freiraum Luftströmung ungehindert eintreten kann.

Erfindungsgemäß ist zudem vorgesehen, dass das Lüfterrad und das Gehäuse derart miteinander in Wirkverbindung stehen, dass im Gehäuse wenigstens ein erster und wenigstens ein zweiter Bereich ausgebildet werden können, die unterschiedliche Strömungsgeschwindigkeiten an Druckluft bzw. unterschiedliche Strömungsgeschwindigkeiten einer Luftströmung besitzen. Die unterschiedlichen Luftströmungen in dem wenigstens einen ersten Bereich und dem wenigstens einen zweiten Bereich können durch die Position des Lüfterrades im Gehäuse sowie durch die entsprechende Formgebung einer Umfangswand des Gehäuses und/oder des Lüfterrades ausgebildet werden. Aus dem Stand der Technik sind entsprechende Messmethoden bekannt, bei welchen die jeweilige Strömungsgeschwindigkeit in unterschiedlichen Bereichen des Gehäuses beispielsweise sensorisch erfasst werden können, um den wenigstens einen ersten Bereich und den wenigstens einen zweiten Bereich zu bestimmen, von welchen eine jeweilige Luftströmung abgegriffen werden soll.

Weiter umfasst die erfindungsgemäße landwirtschaftliche Verteilmaschine wenigstens eine erste Leitungsverbindung, welche mit dem Behältnis in Verbindung steht und die eine Strömungserzeugungseinrichtung fluidisch an die mehreren Dosiereinrichtungen koppelt, um den Dosiereinrichtungen via Druckluft bzw. mittels eines Luftstroms körniges Gut zuzuführen. Die erste Leitungsverbindung kann sich ggf. ein oder mehrfach verzweigen bzw. mehrere Zweige besitzen, wobei mehreren Dosiereinrichtungen jeweils ein eigener Zweig zugeordnet ist, mittels welches Zweiges die jeweilige Dosiereinrichtung körniges Gut erhält.

Zudem umfasst die landwirtschaftliche Verteilmaschine wenigstens eine zweite Leitungsverbindung, welche die eine Strömungserzeugungseinrichtung fluidisch an die mehreren Dosiereinrichtungen koppelt, um das körnige Gut in den Dosiereinrichtungen mittels eines Luftstroms bzw. mittels Druckluft zu vereinzeln. Auch die wenigstens eine zweite Leitungsverbindung kann sich ein oder mehrfach verzweigen bzw. mehrere Zweige besitzen, wobei mehrere Dosiereinrichtungen über einen jeweils zugeordneten Zweig mit Druckluft beaufschlagt werden, um körniges Gut zu vereinzeln. Eine Vereinzelung kann in den einzelnen Dosiereinrichtungen bzw. Dosiervorrichtungen sodann erfolgen.

Weiter ist vorgesehen, dass die wenigstens eine erste Leitungsverbindung in den ersten Bereich des Gehäuses mündet und dass die wenigstens eine zweite Leitungsverbindung in den zweiten Bereich des Gehäuses mündet, so dass eine jeweilige Luftströmung aus den Bereichen an die in den jeweiligen Bereich mündende Leitungsverbindung weitergeführt werden kann. Mittels lediglich einer Strömungserzeugungseinrichtung können somit unterschiedliche Strömungsgeschwindigkeiten und/oder Druckniveaus aus dem Gehäuse abgegriffen und zum Transport von körnigem Gut sowie zur Druckbeaufschlagung und Vereinzelung von körnigem Gut mittels der Dosiereinrichtungen genutzt werden. Die Praxis hat gezeigt, dass zum Transport des körnigen Gutes ein höheres Druckniveau benötigt wird als für die Druckbeaufschlagung der Dosiereinrichtungen zur Vereinzelung des körnigen Gutes. Bei erfindungsgemäßer Verteilvorrichtung bzw. bei erfindungsgemäßem Verfahren kann lediglich eine Strömungserzeugungseinrichtung beide Druckniveaus bereitstellen.

In besonders bevorzugten Ausführungsformen kann eine Strömungserzeugungseinrichtung als Radialgebläse und/oder als Hybridgebläse und/oder als Brennergebläse ausgebildet sein. Weiter haben sich Ausführungsformen bewährt, bei welchen die Strömungserzeugungseinrichtung zwei Abgänge mit unterschiedlichen vorherrschenden statischen Druckniveaus aufweist.

Denkbar ist auch, dass mehrere Dosiereinrichtungen eine fluidische Verbindung besitzen, um den Luftstrom der wenigstens einen ersten Leitungsverbindung und den Luftstrom der wenigstens einen zweiten Leitungsverbindung zusammenzuführen und mittels des zusammengeführten Luftstroms vereinzeltes körniges Gut in Richtung eines oder mehrerer Austragungsorgane zu transportieren. Vorzugsweise kann die fluidische Verbindung ein oder mehrere innerhalb der ein oder mehreren Dosiereinrichtungen positionierte Lochbleche umfassen, welche der Luftstrom der wenigstens einen ersten Leitungsverbindung und der Luftstrom der wenigstens einen zweiten Leitungsverbindung zum Zwecke der Zusammenführung passieren kann.

Auch ist vorstellbar, dass die wenigstens eine erste Leitungsverbindung und/oder die wenigstens eine zweite Leitungsverbindung als Tragrahmen der landwirtschaftlichen Verteilvorrichtung ausgebildet sind. Am Tragrahmen kann beispielsweise das Behältnis für das körnige Gut angeordnet sein, wobei der Tragrahmen eine Masse des Behältnisses zumindest anteilig aufnimmt bzw. trägt.

Auch kann es sein, dass das Gehäuse der Strömungserzeugungseinrichtung eine Luftansaugöffnung besitzt, dessen Öffnungsquerschnitt eine exzentrische Position zur Drehachse des Lüfterrades aufweist. Hierdurch lassen sich die erreichbaren Druckniveaus erhöhen.

Die Erfindung betrifft darüber hinaus ein Verfahren zum Umgang mit körnigem Gut. Merkmale, welche vorhergehend zur landwirtschaftlichen Vorrichtung beschrieben wurden, können ebenso bei denkbaren Ausführungsformen des erfindungsgemäßen Verfahrens vorgesehen sein. Weiter können Merkmale, welche nachfolgend zu denkbaren Ausführungsformen des erfindungsgemäßen Verfahrens beschrieben werden, bei der landwirtschaftlichen Verteilvorrichtung vorgesehen sein.

Im Rahmen des Verfahrens wird eine Luftströmung in einem Gehäuse einer Strömungserzeugungseinrichtung ausgebildet, so dass Strömungsgeschwindigkeiten und/oder Druckniveaus in wenigstens einem ersten bestimmten Bereich des Gehäuses und in wenigstens einem zweiten bestimmten Bereich des Gehäuses unterschiedlich ausgebildet sind. Die Bereiche mit unterschiedlichen Strömungsgeschwindigkeiten können durch eine bestimmte Geometrie des Gehäuses bzw. der Umfangswandung des Gehäuses und/oder durch eine entsprechende Positionierung und/oder geometrische Gestaltung des Lüfterrades im Gehäuse, ggf. in Relation zu einer Luftansaugöffnung, definiert ausgebildet werden.

Im Rahmen eines weiteren Schrittes des erfindungsgemäßen Verfahrens werden Luftströmungen aus dem wenigstens einen ersten bestimmten Bereich und aus dem wenigstens einen zweiten bestimmten Bereich getrennt aus dem Gehäuse abgeführt, wobei mittels der aus dem wenigstens einen ersten bestimmten Bereich abgeführten Luftströmung körniges Gut zu mehreren Dosiereinrichtungen transportiert wird. Weiter werden die mehreren Dosiereinrichtungen zum Zwecke einer Vereinzelung des körnigen Gutes mit der aus dem wenigstens einen zweiten bestimmten Bereich abgegriffenen Luftströmung beaufschlagt. Hierdurch können die mehreren Dosiereinrichtungen das körnige Gut vereinzeln. Eine Vereinzelung des körnigen Gutes kann mittels der Dosiereinrichtungen bzw. Dosiervorrichtungen erfolgen.

Die aus dem wenigstens einen zweiten Bereich abgeführte Luftströmung kann durch eine Rahmenkonstruktion und/oder durch Rohrleitungen zu den mehreren Dosiereinrichtungen geführt werden.

Insbesondere haben sich Ausführungsformen bewährt, bei welchen ein Druckniveau bzw. eine Strömungsgeschwindigkeit der aus dem wenigstens einen ersten bestimmten Bereich abgeführten Luftströmung größer oder zumindest näherungsweise identisch gegenüber einem Druckniveau bzw. einer Strömungsgeschwindigkeit der aus dem wenigstens einen zweiten bestimmten Bereich abgeführten Luftströmung ausgebildet ist.

Vorteilhafterweise kann im Rahmen des erfindungsgemäßen Verfahrens mittels einer Strömungserzeugungseinrichtung bzw. mittels eines Gehäuses körniges Gut mehreren Dosiereinrichtungen zugeführt werden und die mehreren Dosiereinrichtungen zur Vereinzelung des körnigen Gutes mit Überdruck bzw. Differenzdruck beaufschlagt werden. Gegenüber bereits aus dem Stand der Technik bekannten Ausführungsformen, bei welchen mehrere Strömungserzeugungseinrichtungen für unterschiedliche Druckniveaus vorgesehen sind, ist das erfindungsgemäße Verfahren daher mit geringerem Energieverbrauch umsetzbar.

Denkbar ist darüber hinaus, dass die aus dem wenigstens einen ersten bestimmten Bereich abgeführte Luftströmung und die aus dem wenigstens einen zweiten bestimmten Bereich abgeführte Luftströmung in den mehreren Dosiereinrichtungen zusammengeführt werden, wobei mittels der zusammengeführten Luftströmung vereinzeltes körniges Gut in Richtung einer oder mehrerer Austragungsorgane transportiert wird.

Weiter kann die aus dem wenigstens einen ersten bestimmten Bereich abgeführte Luftströmung oder die aus dem wenigstens einen zweiten bestimmten Bereich abgeführte Luftströmung zum Zwecke der Zusammenführung ein oder mehrere vorzugsweise innerhalb der mehreren Dosiereinrichtungen positionierte Lochblech passieren.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figur 1 zeigt eine schematische Ansicht einer ersten Ausführungsform einer erfindungsgemäßen landwirtschaftlichen Verteilvorrichtung;
Figur 2 zeigt eine schematische Ansicht einer weiteren Ausführungsform einer landwirtschaftlichen Verteilvorrichtung;
Figur 3 zeigt eine schematische Ansicht einer Strömungserzeugungseinrichtung, wie sie für diverse Ausführungsformen einer landwirtschaftlichen Verteilvorrichtung vorgesehen sein kann;
Figuren 4 zeigen mehrere Geometrien, wie sie bei einem Gehäuse einer für diverse Ausführungsformen einer landwirtschaftlichen Verteilvorrichtung vorgesehen Strömungserzeugungseinrichtung vorgesehen sein können.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar.

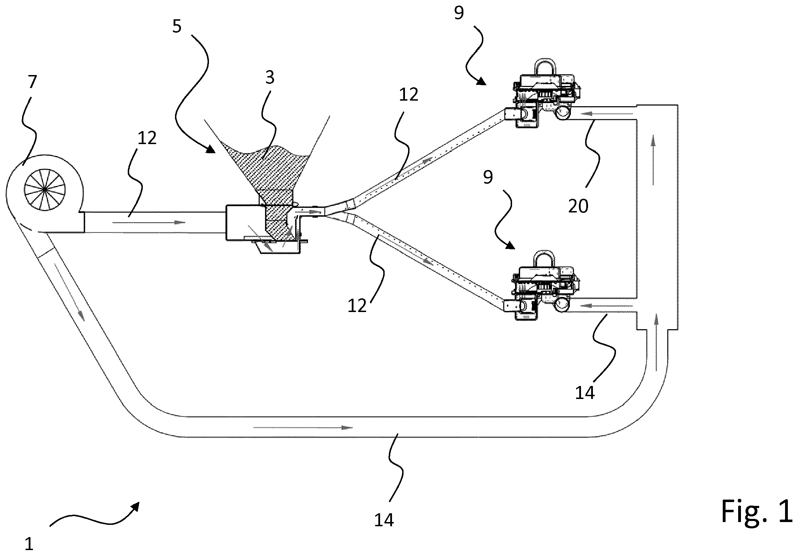

Figur 1 zeigt eine schematische Ansicht einer ersten Ausführungsform einer erfindungsgemäßen landwirtschaftlichen Verteilvorrichtung 1. Die landwirtschaftliche Verteilvorrichtung 1 ist vorgesehen zum Ausbringen von körnigem Gut 3 und umfasst hierzu ein Behältnis 5, in welchem das körnige Gut 3 gespeichert ist. Das körnige Gut 3 ist vorliegend als Saatgut ausgebildet, kann jedoch bei denkbaren weiteren Ausführungsformen auch als Dünger oder dergl. ausgebildet sein.

Die Vorrichtung 1 umfasst zudem mehrere Dosiereinrichtungen 9, die zur Vereinzelung des körnigen Gutes 3 ausgebildet sind und hierzu jeweils mit einer Luftströmung bzw. mit Druckluft beaufschlagt werden. Die Druckluft wird durch eine Strömungserzeugungseinrichtung herbeigeführt, auf welche Ziffer 7 in Figur 1 verweist. Beispielhafte Ausführungsformen zur konstruktiven sowie funktionellen Ausgestaltung der Strömungserzeugungseinrichtung 7 sind den Figuren vorliegender Patentanmeldung zu entnehmen.

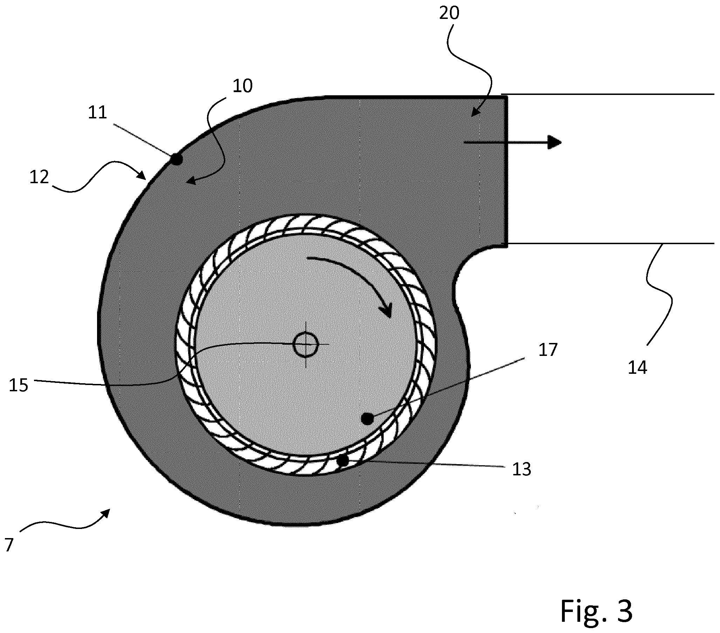

Die Strömungserzeugungseinrichtung 7 besitzt ein Gehäuse 11 sowie ein im Gehäuse 11 drehendes Lüfterrad 13 (vgl. Figur 3). Das Gehäuse 11 und das Lüfterrad 13 wirken derart zusammen, dass im Gehäuse 11 wenigstens ein erster und wenigstens ein zweiter Bereich 10 und 20 (vgl. Figuren 3 bis 7) ausgebildet werden können, in welchen der Luftstrom unterschiedliche Strömungsgeschwindigkeiten und/oder Druckniveaus besitzt.

Weiter umfasst die landwirtschaftliche Verteilvorrichtung 1 eine erste Leitungsverbindung 12, die mit dem Behältnis 5 in Verbindung steht. Aus dem Behältnis 5 kann der ersten Leitungsverbindung 12 körniges Gut 3 zugeführt werden. Dem Behältnis 5 in Strömungsrichtung nachgeordnet verzweigt sich die erste Leitungsverbindung 12 bzw. bildet mehrere Zweige aus, um jeder Dosiereinrichtung 9 mittels eines jeweils zugeordneten Zweiges körniges Gut 3 zuführen zu können. An jede der Dosiereinrichtungen 9 sind zudem ein oder mehrere Verteilungsorgane, beispielsweise Schlauchverbindungen, gekoppelt, um das vereinzelte körnige Gut 3 im Erdreich abzulegen. Die Verteilungsorgane sind in vorliegender Patentanmeldung nicht mit dargestellt.

Auch umfasst die landwirtschaftliche Verteilvorrichtung 1 eine zweite Leitungsverbindung 14, welche die Strömungserzeugungseinrichtung 7 fluidisch an die Dosiereinrichtungen 9 koppelt, um das via die erste Leitungsverbindung 12 den Dosiereinrichtungen 9 zugeführte körnige Gut 3 mittels Druckluft zu vereinzeln. Auch die zweite Leitungsverbindung14 bildet mehrere Zweige aus, um jeder Dosiereinrichtung 9 zum Zwecke einer jeweiligen Vereinzelung Druckluft zuführen zu können.

Um das körnige Gut 3 problemlos an die Dosiereinrichtungen 9 befördern zu können und um das körnige Gut 3 sodann mittels der Dosiereinrichtungen 9 zu vereinzeln, ist ein in der zweiten Leitungsverbindung 14 ausgebildetes Druckniveau gegenüber einem in der ersten Leitungsverbindung 12 ausgebildetem Druckniveau vermindert. Dies kann erreicht werden, indem eine jeweilige Luftströmung für die erste Leitungsverbindung 12 und eine jeweilige Luftströmung für die zweite Leitungsverbindung 14 getrennt aus einem jeweiligen Bereich 10 bzw. 20 des Gehäuses 11 der Strömungserzeugungseinrichtung 7 abgeführt werden, in welchen Bereichen 10 und 20 unterschiedliche Strömungsgeschwindigkeiten herrschen.

Mittels lediglich einer Strömungserzeugungseinrichtung 7 können daher, wie im Ausführungsbeispiel aus Figur 1 gezeigt, unterschiedliche Druckniveaus erzeugt werden, um mehreren Dosiereinrichtungen 9 körniges Gut 3 zuzuführen und das körnige Gut 3 mittels der mehreren Dosiereinrichtungen 9 zu vereinzeln.

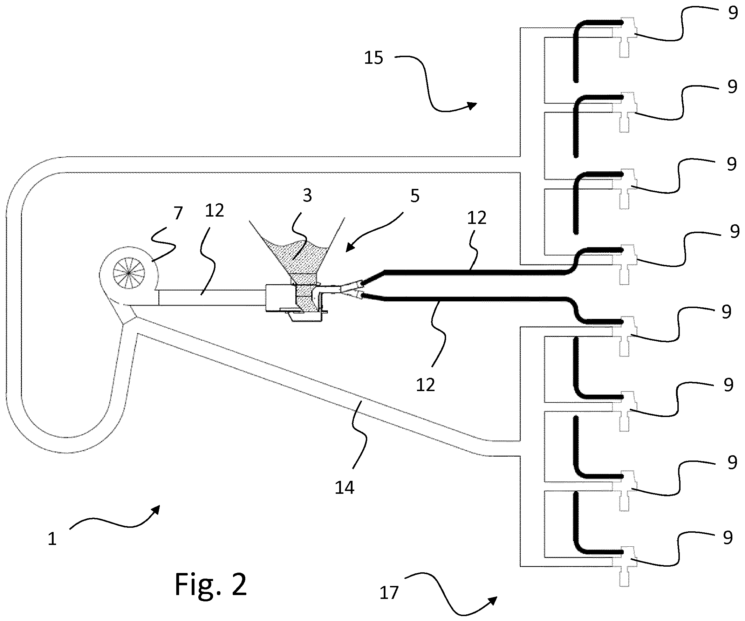

Figur 2 zeigt eine schematische Ansicht einer weiteren Ausführungsform einer landwirtschaftlichen Verteilvorrichtung 1. Auch die Verteilvorrichtung 1 gemäß dem Ausführungsbeispiel aus Figur 2 besitzt ein Behältnis 5 mit körnigem Gut 3 bzw. Saatgut sowie eine Strömungserzeugungseinrichtung 7.

Beim Ausführungsbeispiel aus Figur 2 sind mehrere Dosiereinrichtungen 9 zu einer ersten Einheit 15 zusammengefasst und mehrere weitere Dosiereinrichtungen 9 zu einer zweiten Einheit 17. Auch die Verteilvorrichtung 1 gemäß Figur 1 besitzt eine erste Leitungsverbindung 12, die mit dem Behältnis 5 in Verbindung steht und die Strömungserzeugungseinrichtung 7 fluidisch an die Dosiereinrichtungen 9 der ersten Einheit 15 und der zweiten Einheit 17 koppelt, um den Dosiereinrichtungen 9 via Druckluft bzw. mittels einer Luftströmung körniges Gut 3 zuzuführen. Hierzu verzweigt sich die erste Leitungsverbindung 12 bzw. besitzt zwei Zweige, welche dem Behältnis 5 in Strömungsrichtung nachgeordnet sind. Ein erster Zweig versorgt hierbei die Dosiereinrichtungen 9 der ersten Einheit 15 mit körnigem Gut 3. Ein zweiter Zweig der ersten Leitungsverbindung 12 versorgt die Dosiereinrichtungen 9 der zweiten Einheit 17 mit körnigem Gut 3 bzw. Saatgut.

Auch ist eine zweite Leitungsverbindung 14 vorgesehen, welche die Strömungserzeugungseinrichtung 7 fluidisch an die Dosiereinrichtungen 9 der ersten Einheit 15 und der zweiten Einheit 17 koppelt, um das körnige Gut 3 in den Dosiereinrichtungen 9 mittels Druckluft zu vereinzeln. Hierbei ist eine erste Verzweigung der zweiten Leitungsverbindung 14 vorgesehen, wobei ein Zweig Druckluft in Richtung der ersten Einheit 15 führt und ein weiterer Zweig Druckluft in Richtung der zweiten Einheit 17 führt. Um die einzelnen Dosiereinrichtungen 9 zum Zwecke einer Vereinzelung des körnigen Gutes 3 jeweils mit Druckluft zu versorgen, sind weitere Verzweigungen vorgesehen, wobei jeder Dosiereinrichtung 9 ein eigener Zweig zugeordnet ist. Figur 2 lässt insbesondere erkennen, dass mittels lediglich einer Strömungseinrichtung 7 einer Vielzahl an Dosiereinrichtungen 9 körniges Gut 3 zugeführt werden kann. Weiter kann mittels lediglich einer Strömungseinrichtung 7 einer Vielzahl an Dosiereinrichtungen 9 Druckluft zugeführt werden, um das körnige Gut 3 bzw. Saatgut zu vereinzeln. Mittels der nachfolgend beschriebenen Ausführungsformen einer Strömungserzeugungseinrichtung 7 lässt sich ein sehr hohes Druckniveau erreichen, so dass die erfindungsgemäße Verteilvorrichtung 1, wie beispielhaft in den Figuren 1 und 2 gezeigt, unter Verwendung lediglich einer Strömungserzeugungseinrichtung 7 einen einfachen und unkomplizierten Aufbau besitzt.

Figur 3 zeigt eine schematische Ansicht einer Strömungserzeugungseinrichtung 7, wie sie für diverse Ausführungsformen einer landwirtschaftlichen Verteilvorrichtung 1 vorgesehen sein kann. Die Strömungserzeugungseinrichtung 7 umfasst eine Ansaugöffnung 17, deren Öffnungsquerschnitt sich radial um die Drehachse 15 des Lüfterrades 13 erstreckt. Weiterhin ist eine zweite Leitungsverbindung 14 vorgesehen, über welche Druckluft zum Zwecke einer Vereinzelung des körnigen Gutes 3 (vgl. Figuren 1 bis 2) an die Dosiereinrichtungen 9 weitergeführt wird. Die erste Leitungsverbindung ist in Figur 3 nicht mit dargestellt, Ziffer 12 verweist jedoch auf ihre Position, an welcher die erste Leitungsverbindung über einen Durchbruch in das Gehäuse 11 eingebracht ist und eine Luftströmung aus dem Gehäuse 11 abführt. Auch der erste Bereich 10 und der zweite Bereich 20 sind zu erkennnen, wobei die Luftströmung im ersten Bereich 10 eine geringere Strömungsgeschwindigkeit besitzt als im zweiten Bereich 20.

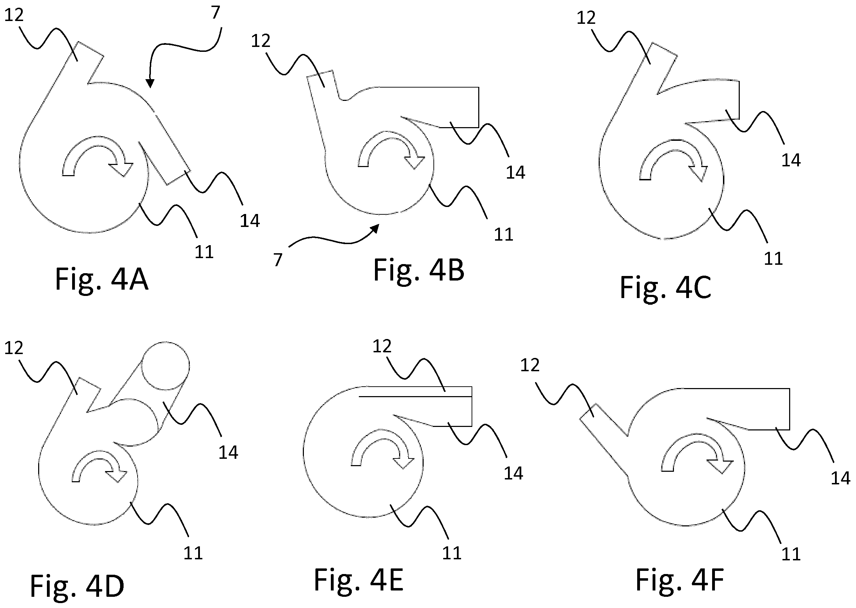

Figuren 4 zeigen mehrere Geometrien, wie sie bei einem Gehäuse 11 einer für diverse Ausführungsformen einer landwirtschaftlichen Verteilvorrichtung 1 vorgesehen Strömungserzeugungseinrichtung 7 vorgesehen sein können. Die Pfeildarstellung verweist in den Figuren 4A bis 4F jeweils auf die Drehrichtung eines nicht mit dargestellten Lüfterrades 13.

Die Gehäuse 11 der Strömungseinrichtungen 7 gemäß Figuren 4A bis 4F besitzen einen unterschiedlichen Verlauf ihrer Umfangswandung, welcher unter Berücksichtigung der Position der jeweiligen ersten und zweiten Leitungsverbindungen 12 und 14 derart gewählt werden kann, dass in den Leitungsverbindungen 12 und 14 erwünschte Strömungsgeschwindigkeiten einer Luftströmung ausgebildet sind. Figur 4E lässt hierbei eine Anordnung erkennen, bei welcher die erste Leitungsverbindung 12 und die zweite Leitungsverbindung 14 parallel zueinander verlaufen. Bei Ausführungsform aus Figur 4D kann die Luftströmung in der zweiten Leitungsverbindung 14 spiralförmig geführt werden. Der jeweilige Umfangsverlauf des Gehäuses 11 gemäß Figuren 4A bis 4F sowie die Positionen der Leitungsverbindungen 12 und 14 sind lediglich beispielhaft zu verstehen, so dass darüber hinaus zahlreiche weitere Möglichkeiten existieren, ohne den Schutzbereich vorliegender Patentanmeldung zu verlassen.

### Bezugszeichenliste

- 1: Verteilvorrichtung
- 3: Körniges Gut
- 4: Innenwand
- 5: Behältnis
- 7: Strömungserzeugungseinrichtung
- 9: Dosiereinrichtung
- 10: Erster Bereich
- 11: Gehäuse
- 12: Erste Leitungsverbindung
- 13: Lüfterrad
- 14: Zweite Leitungsverbindung
- 15: Drehachse
- 17: Ansaugöffnung
- 20: Zweiter Bereich

## Patentansprüche

1. Landwirtschaftliche Verteilvorrichtung (1) zum Ausbringen von körnigem Gut (3), umfassend
- ein Behältnis (5) für das körnige Gut (3),
- mehrere Dosiereinrichtungen (9), welche körniges Gut (3) mittels eines Überdrucks und/oder einer Druckdifferenz vereinzeln können;
- eine Strömungserzeugungseinrichtung (7), die ein Gehäuse (11) sowie wenigstens ein im Gehäuse (11) drehendes Lüfterrad (13) aufweist, wobei das Lüfterrad (13) und das Gehäuse (11) derart miteinander in Wirkverbindung stehen, dass im Gehäuse (11) wenigstens ein erster (10) und wenigstens ein zweiter (20) Bereich ausgebildet werden können, die unterschiedliche Strömungsgeschwindigkeiten und/oder unterschiedliche statische Druckniveaus eines Luftstroms besitzen,
- wenigstens eine erste Leitungsverbindung (12), welche mit dem Behältnis (5) in Verbindung steht und die eine Strömungserzeugungseinrichtung (7) fluidisch an die mehreren Dosiereinrichtungen (9) koppelt, um den Dosiereinrichtungen (9) mittels eines Luftstroms körniges Gut (3) zuzuführen,
- wenigstens eine zweite Leitungsverbindung (14), welche die eine Strömungserzeugungseinrichtung (7) fluidisch an die mehreren Dosiereinrichtungen (9) koppelt, um das körnige Gut (3) in den Dosiereinrichtungen (9) mittels eines Luftstroms zu vereinzeln, und **dadurch gekennzeichnet, dass** die wenigstens eine erste Leitungsverbindung (12) in den ersten Bereich (10) des Gehäuses (11) der Strömungserzeugungseinrichtung (7) mündet und wobei die wenigstens eine zweite Leitungsverbindung (14) in den zweiten Bereich (20) des Gehäuses (11) der Strömungserzeugungseinrichtung (7) mündet, so dass eine jeweilige Luftströmung aus den Bereichen (10, 20) an die in den jeweiligen Bereich (10, 20) mündende Leitungsverbindung (12, 14) weitergeführt werden kann.

2. Landwirtschaftliche Verteilvorrichtung nach Anspruch 1, bei welcher eine Strömungserzeugungseinrichtung (7) als Radialgebläse und/oder Hybridgebläse und/oder Brennergebläse ausgebildet ist.

3. Landwirtschaftliche Verteilvorrichtung nach Anspruch 1 oder Anspruch 2, bei welcher die Strömungserzeugungseinrichtung (7) zwei Abgänge mit unterschiedlichen vorherrschenden statischen Druckniveaus aufweist.

4. Landwirtschaftliche Verteilvorrichtung nach einem oder mehreren der Ansprüche 1 bis 3, bei welcher mehrere Dosiereinrichtungen (9) eine fluidische Verbindung besitzen, um den Luftstrom der wenigstens einen ersten Leitungsverbindung (12) und den Luftstrom der wenigstens einen zweiten Leitungsverbindung (14) zusammenzuführen und mittels des zusammengeführten Luftstroms vereinzeltes körniges Gut (3) in Richtung eines oder mehrerer Austragungsorgane zu transportieren.

5. Landwirtschaftliche Verteilvorrichtung nach Anspruch 4, bei welcher die fluidische Verbindung ein oder mehrere vorzugsweise innerhalb der mehreren Dosiereinrichtungen (9) positionierte Lochbleche umfasst, welche der Luftstrom der wenigstens einen ersten Leitungsverbindung (12) und/oder der Luftstrom der wenigstens einen zweiten Leitungsverbindung (14) zum Zwecke der Zusammenführung passieren kann.

6. Landwirtschaftliche Verteilvorrichtung nach einem oder mehreren der Ansprüche 1 bis 5, bei welcher die wenigstens eine erste Leitungsverbindung (12) und/oder die wenigstens eine zweite Leitungsverbindung (14) als Tragrahmen der landwirtschaftlichen Verteilvorrichtung ausgebildet sind.

7. Landwirtschaftliche Verteilvorrichtung nach einem oder mehreren der Ansprüche 1 bis 6, bei welcher das Gehäuse (11) der Strömungserzeugungseinrichtung (7) eine Luftansaugöffnung (17) besitzt, deren Öffnungsquerschnitt eine exzentrische Position zu einer Drehachse (15) des Lüfterrades (13) aufweist.

8. Verfahren zum Umgang mit körnigem Gut (3), umfassend folgende Schritte:
- Ausbilden einer Luftströmung in einem Gehäuse (11) einer Strömungserzeugungseinrichtung (7), so dass Strömungsgeschwindigkeiten und/oder Druckniveaus in wenigstens einem ersten bestimmten Bereich (10) des Gehäuses (11) und in wenigstens einem zweiten bestimmten Bereich (20) des Gehäuses (11) unterschiedlich sind,
- getrenntes Abführen der Luftströmung aus dem wenigstens einen ersten bestimmten Bereich (10) und aus dem wenigstens einen zweiten bestimmten Bereich (20), wobei mittels der aus dem wenigstens einen ersten bestimmten Bereich (10) abgeführten Luftströmung körniges Gut (3) zu mehreren Dosiereinrichtungen (9) transportiert wird und wobei die mehreren Dosiereinrichtungen (9) zum Zwecke einer Vereinzelung des körnigen Gutes (3) mit der aus dem wenigstens einen zweiten bestimmten Bereich (20) abgeführten Luftströmung beaufschlagt werden.

9. Verfahren nach Anspruch 8, bei welchem die aus dem wenigstens einen ersten bestimmten Bereich (10) abgeführte Luftströmung und die aus dem wenigstens einen zweiten Bereich (20) abgeführte Luftströmung in den mehreren Dosiereinrichtungen (9) zusammengeführt werden, wobei mittels der zusammengeführten Luftströmung vereinzeltes körniges Gut (3) in Richtung einer oder mehrerer Austragungsorgane transportiert wird.

10. Verfahren nach Anspruch 9, bei welchem die aus dem wenigstens einen ersten bestimmten Bereich (10) abgeführte Luftströmung oder die aus dem wenigstens einen zweiten bestimmten Bereich (20) abgeführte Luftströmung zum Zwecke der Zusammenführung ein oder mehrere vorzugsweise innerhalb der mehreren Dosiereinrichtungen (9) positionierte Lochbleche passieren.

## Claims

1. An agricultural distribution apparatus (1) for spreading granular material (3), the distribution apparatus (1) comprising
- a receptacle (5) for the granular material (3);
- a plurality of metering devices (9), which can separate granular material (3) by means of a positive pressure and/or by means of a pressure difference;
- a flow generating device (7), which has a housing (11) as well as at least one fan wheel (13) rotating in the housing (11), wherein the fan wheel (13) and the housing (11) are in operative connection to each other such that at least one first area (10) and at least one second area (20) can be formed in the housing (11), which areas have different flow velocities and/or different static pressure levels of an air stream;
- at least one first line connection (12), which is in connection to the receptacle (5) and which fluidically couples the one flow generating device (7) to the plurality of metering devices (9) in order to feed granular material (3) to the metering devices (9) by means of an air stream;
- at least one second line connection (14), which fluidically couples the one flow generating device (7) to the plurality of metering devices (9) in order to separate the granular material (3) in the metering devices (9) by means of an air stream; and
**characterised in that** the at least one first line connection line connection (12) leads into the first area (10) of the housing (11) of the flow generating device (7), and wherein the at least one second line connection (14) leads into the second area (20) of the housing (11) of the flow generating device (7), such that a particular air flow from the areas (10, 20) can be guided further to the particular line connection (12, 14) leading into the particular area (10, 20).

2. The agricultural distribution apparatus according to claim 1, in which a flow generating device (7) is designed as radial blower and/or hybrid blower and/or burner blower.

3. The agricultural distribution apparatus according to claim 1 or claim 2, in which the flow generating device (7) has two outflows with different prevailing static pressure levels.

4. The agricultural distribution apparatus according to one or more of the claims 1 to 3, in which a plurality of metering devices (9) have a fluidic connection in order to combine the air stream of the at least one first line connection (12) and the air stream of the at least one second line connection (14), and to transport granular material (3) that has been separated by means of the combined air stream toward one or more discharge organs.

5. The agricultural distribution apparatus according to claim 4, in which the fluidic connection comprises one or more perforated sheets positioned preferably inside the plurality of metering devices (9), which perforated sheets the air stream of the at least one first line connection (12) and/or the air stream of the at least one second line connection (14) can pass for the purpose of the air streams being combined.

6. The agricultural distribution apparatus according to one or more of the claims 1 to 5, in which the at least one first line connection (12) and/or the at least one second line connection (14) is designed as support frame of the agricultural distribution apparatus.

7. The agricultural distribution apparatus according to one or more of the claims 1 to 6, in which the housing (11) of the flow generating device (7) has an air intake opening (17), the opening cross section of which has an eccentric position in relation to an axis of rotation (15) of the fan wheel (13).

8. A method to handle granular material (3), the method comprising the following steps:
- formation of an air flow in a housing (11) of a flow generating device (7) such that flow velocities and/or pressure levels in at least one first determined area (10) of the housing (11) and in at least one second determined area (20) of the housing (11) are different;
- separate discharging of the air flow from the at least one first determined area (10) and from the at least one second determined area (20), wherein granular material (3) that has been separated by means of the air flow discharged from the at least one first determined area (10) is transported to a plurality of metering devices (9), and wherein the plurality of metering devices (9) is supplied with the air flow discharged from the at least one second determined area (20) for the purpose of a separation of the granular material (3).

9. The method according to claim 8, in which the air flow discharged from the at least one first determined area (10) and the air flow discharged from the at least one second area (20) are combined in the plurality of metering devices (9), wherein granular material (3) that has been separated by means of the combined air flow is transported toward one or more discharge organs.

10. The method according to claim 9, in which the air flow discharged from the at least one first determined area (10) or the air flow discharged from the at least one second determined area (20) passes one or more perforated sheets positioned preferably inside the plurality of metering devices (9) for the purpose of the air flows being combined.

## Revendications

1. Dispositif agricole de distribution (1) pour épandre des produits granuleux (3), comprenant
- un contenant (5) pour les produits granuleux (3) ;
- plusieurs doseurs (9) susceptibles d'individualiser des produits granuleux (3) au moyen d'une surpression et/ou d'une différence de pression ;
- un générateur d'écoulement (7) qui présente un boîtier (11) ainsi qu'au moins une roue de ventilateur (13) tournant dans le boîtier (11), la roue de ventilateur (13) et le boîtier (11) coopérant de telle sorte qu'au moins une première zone (10) et au moins une deuxième zone (20), lesquelles ont des vitesses d'écoulement différentes et/ou des niveaux de pression statique différents d'un flux d'air, sont susceptible d'être constituées dans le boîtier (11);
- au moins une première conduite de liaison (12) qui est en liaison avec le contenant (5) et qui relie par fluide ledit générateur d'écoulement (7) auxdits plusieurs doseurs (9) pour amener les produits granuleux (3) aux doseurs (9) à l'aide d'un flux d'air ;
- au moins une deuxième conduite de liaison (14) qui relie par fluide ledit générateur d'écoulement (7) auxdits plusieurs doseurs (9) pour individualiser les produits granuleux (3) dans les doseurs (9) à l'aide d'un flux d'air ; et
**caractérisé en ce que** ladite au moins première conduite de liaison (12) débouche dans la première zone (10) du boîtier (11) du générateur d'écoulement (7) et ladite au moins deuxième conduite de liaison (14) débouche dans la deuxième zone (20) du boîtier (11) du générateur d'écoulement (7), de telle sorte qu'un écoulement d'air respectif sortant des zones (10, 20) est susceptible de se prolonger dans la conduite de liaison (12, 14) débouchant dans la zone respective (10, 20).

2. Dispositif agricole de distribution selon la revendication 1, dans lequel un générateur d'écoulement (7) est conçu en tant que ventilateur centrifuge et/ou ventilateur hybride et/ou ventilateur de combustion.

3. Dispositif agricole de distribution selon la revendication 1 ou la revendication 2, dans lequel le générateur d'écoulement (7) présente deux sorties dans lesquelles des niveaux de pression statique différents prédominent.

4. Dispositif agricole de distribution selon l'une quelconque ou plusieurs des revendications 1 à 3, dans lequel plusieurs doseurs (9) ont une liaison par fluide pour réunir le flux d'air de ladite au moins première conduite de liaison (12) et le flux d'air de ladite au moins deuxième conduite de liaison (14) et pour transporter les produits granuleux (3), individualisés à l'aide du flux d'air réuni, vers un ou plusieurs organes d'épandage.

5. Dispositif agricole de distribution selon la revendication 4, dans lequel la liaison par fluide comprend une ou plusieurs tôles perforées qui sont positionnées de préférence à l'intérieur desdits plusieurs doseurs (9) et au travers desquelles le flux d'air de ladite au moins première conduite de liaison (12) et/ou le flux d'air de ladite au moins deuxième conduite de liaison (14) sont susceptibles de passer dans le but d'être réunis.

6. Dispositif agricole de distribution selon l'une quelconque ou plusieurs des revendications 1 à 5, dans lequel ladite au moins première conduite de liaison (12) et/ou ladite au moins deuxième conduite de liaison (14) sont conçues en tant que châssis porteur du dispositif agricole de distribution.

7. Dispositif agricole de distribution selon l'une quelconque ou plusieurs des revendications 1 à 6, dans lequel le boîtier (11) du générateur d'écoulement (7) a une ouverture d'aspiration d'air (17) dont la section droite d'ouverture présente une position excentrée par rapport à un axe de rotation (15) de la roue de ventilateur (13).

8. Procédé de manutention de produits granuleux (3), comprenant les étapes suivantes :
- la formation d'un écoulement d'air dans un boîtier (11) d'un générateur d'écoulement (7), de telle sorte que les vitesses d'écoulement et /ou les niveaux de pression dans au moins une première zone (10) définie du boîtier (11) et dans au moins une deuxième zone (20) définie du boîtier (11) sont différents ;
- l'évacuation séparée de l'écoulement d'air sortant de ladite au moins première zone (10) définie et de ladite au moins deuxième zone (20) définie, des produits granuleux (3) étant transportés vers plusieurs doseurs (9) au moyen de l'écoulement d'air évacué sortant de ladite au moins première zone (10) définie, et l'écoulement d'air évacué sortant de ladite au moins deuxième zone (20) définie étant appliqué auxdits plusieurs doseurs (9) dans le but d'individualiser les produits granuleux (3).

9. Procédé selon la revendication 8, dans lequel l'écoulement d'air évacué sortant de ladite au moins première zone (10) définie et l'écoulement d'air évacué sortant de ladite au moins deuxième zone (20) définie étant réunis dans lesdits plusieurs doseurs (9), des produits granuleux (3) individualisés étant transportés vers un ou plusieurs organes d'épandage au moyen de l'écoulement d'air réuni.

10. Procédé selon la revendication 9, dans lequel l'écoulement d'air évacué sortant de ladite au moins première zone (10) définie ou l'écoulement d'air évacué sortant de ladite au moins deuxième zone (20) définie passent au travers d'une ou plusieurs tôles perforées positionnées de préférence à l'intérieur desdits plusieurs doseurs (9) dans le but d'être réunis.
